# EUROPEAN PATENT SPECIFICATION

(11) **EP 1 819 092 B1**
(45) Date of publication and mention of the grant of the patent: **08.01.2014**
(21) Application number: 05808318.9
(22) Date of filing: 18.11.2005
(51) Int. Cl.: H04L 29/06, H04M 15/00, H04L 12/14

(54) **METHOD AND SYSTEM FOR CONTROLLING A SESSION**
VERFAHREN UND SYSTEM UM EINE SITZUNG ZU KONTROLLIEREN
PROCEDE ET SYSTEME DE COMMANDE DE SESSION

(30) Priority: 22.12.2004 CN 200410101759
(43) Date of publication of application: 15.08.2007
(73) Proprietor: Huawei Technologies Co., Ltd., Longgang District, Shenzhen Guangdong 518129 (CN)
(72) Inventor: ZHU, Yong, Shenzhen, Guangdong 518129 (CN); HU, Lixin, Shenzhen, Guangdong 518129 (CN)
(74) Representative: Körber, Martin Hans
(86) International application number: PCT/CN2005/001950
(87) International publication number: WO 2006/066481

(56) References cited:
- WO-A-2004/056079
- WO-A1-00/72572
- WO-A2-95/28062
- WO-A2-03/081842
- CN-A- 1 440 158
- CN-A- 1 474 538
- GB-A- 2 370 448

## Description

### Field of the Technology

The present invention relates to the field of charging in a communication system, and particularly to a method and a system for processing a session.

### Background of the Invention

Charging processing is very important in telecommunication services. It provides a telecommunication operator with charging information so that the operator may carry out relevant account processing. Moreover, by providing the charging information to a relevant third-party service provider, the account settlement between the third-party service provider and the telecommunication operator may be done when two operators are concerned.

The present fixed phone services are charged mainly based on a called number, for example 800**** for free call, 0139**** for toll call, 878**** for local call, and 97**** for charged information call. A user may learn a relevant rate in advance, reckon a call by time, and figure out a fee according to the rate so as to control the call duration.

In a Next Generation Network (NGN), however, there are a variety of communication modes, such as message, voice, and multimedia, so it is impossible to charge according to the called number. Along with the rapid updating of services, it is difficult for a user to timely learn the rate of the new one. Furthermore, a plurality of services is provided by third-party service providers. So when a user uses a service, multiple operators and service providers may be involved, and they may all charge the user. It is difficult for the user to learn the fee each operator collects. Therefore, the user may not know how a service is charged and what a bill he will face. Even when he finishes using the service, he is still ignorant of how the bill will be like until receiving the bill from the telecommunication operator at the end of a month.

That is, in the NGN, it is even more difficult for the user to predict how much he has to pay for a service, so he can not control call duration beforehand according to the fee and decide whether he will use the service.

GB-A-2 370 448 discloses a method of controlling costs associated with Voice Over IP connections. The method includes: including a maximum charge parameter in a call connection set-up message sent over an IP network; when the connection is required to break out of the IP network into a telecommunication network, comparing the maximum charge parameter contained in the set-up message with a charge parameter associated with the break out part of the connection; if the charge parameter contained in the set-up message is less than (or equal to) the charge parameter associated with break out, the connection is completed; otherwise, the connection is not completed.

WO 2004/056079 A discloses a method of negotiating the sharing of a cost associated with a communication service between a plurality of participants. The method includes: sending a cost sharing request from a terminal used by a first of the participants to terminals used by the or each other participant; at the or each terminal, processing the request according to predefined cost sharing rules and notifying the first participant's terminal of the result; the network supporting the service being informed of the negotiated cost sharing formula, and the participants being charged by the network in accordance with the formula.

### Summary of the invention

The embodiments of the present invention provide a method and a system for processing a session to enable a user to conveniently control the rate, duration or fee of a session.

A method for processing a session includes:
receiving, by a session server, a session request comprising first charging information from a session initiator, wherein the first charging information comprises a fee or volume desired by a calling user;
continuing processing, by the session server, the call request if the session server determines that the first charging information is reasonable according to a charging rule stored in the session server, wherein the first charging information being reasonable comprises at least one of: the fee or volume desired by the calling user in the first charging information not being less than a minimum fee or volume in the charging rule stored in the session server, and the rate desired by the calling user not
being lower than a minimum rate in the charging rule stored in the session server;
determining, by the session server, a fee or volume of the session after putting through the session, and terminating the session or prompting the calling user to resend second charging information comprising new fee or volume if the fee or volume of the session exceeds or will exceed the fee or volume desired by the calling user;
transferring charging information between a first operator and other operators, and providing, by the first operator, the calling user with charging information according to charging information provided by other operators; and
receiving, by servers of other operators, the charging information, determining whether the charging information is reasonable, and when all the servers consider the fee reasonable, establishing a session between the calling user equipment and a called user equipment; wherein
the step of transferring charging information between a first operator and other operators, and providing, by the first operator, a user with charging information according to charging information provided by other operators comprises:
   after receiving the charging information of the calling user, figuring out, by a server A of the first operator, a maximum fee that a second operator charges, modifying content of the charging information, and sending the content of the charging information as part of the session request to a server B of the second operator; wherein
   the step of figuring out, by a server A of the first operator, a maximum fee that a second operator charges comprises:
      subtracting, by the server A of the first operator, its own rate and applying deduction from income of the second operator.

The first charging information further includes a rate desired by the calling user; the method further includes:
terminating the session or prompting the calling user to resend a second charging information comprising a new rate if the other information of the session changes during the session.

The first charging information being reasonable further includes:
if the first communication unit is a prepayment user, a balance of prepayment account of the calling not exceeding a credit line.

The session initiator stores charging rules corresponding to different sessions; and
receiving the session request includes:
reading, by the session initiator, a charging rule corresponding to the session and generates the first charging information according to the charging rule corresponding to the session; and
receiving, by the session server, the session request comprising the first charging information from the session initiator.

The charging rules corresponding to different sessions includes charging rules corresponding to different called users.

The first charging information includes flag information for requesting the session server to send the charging rule to the session initiator; the method further includes:
receiving, by the session initiator, the charging rule from the session server, taking the charging rule as the first charging information, and sending a new session request to the session server, wherein the first charging information in the new session request comprises flag information for indicating agreement on the charging rule.

The method further includes:
prompting, by the session initiator, the calling user to resend the second charging information, and sending the second charging information to the session server after obtaining a confirmation from the calling user.

The method further includes:
providing charging information to the session initiator to display to the
calling user during the session or after the session.

A system for processing a session includes:
a first unit, configured to receive a session request comprising first charging information from a session initiator, wherein the first charging information comprises a fee or volume desired by a calling user;
a second unit, configured to continue processing the call request if the second unit determines that the first charging information is reasonable according to a charging rule, wherein the first charging information being reasonable comprises at least one of: the fee or volume desired by the calling user in the first charging information not being less than a minimum fee or volume in the charging rule stored in the session server, and the rate desired by the calling user not being lower than a minimum rate in the charging rule stored in the session server;
a third unit, configured to determine a fee or volume of the session after the second unit puts through the session, and terminate the session or prompt the calling user to resend second charging information comprising new fee or volume if the fee or volume of the session exceeds or will exceed the fee or volume desired by the calling user; wherein
charging information is transferred between a first operator and other operators, and the first operator provides the calling user with charging information according to charging information provided by other operators;
servers of other operators are configured to receive the charging information, and determine whether the charging information is reasonable, and when all the servers consider the fee reasonable, a session between the calling user equipment and a called user equipment is established;
a server A of the first operator is configured to figure out a maximum fee that a second operator charges after receiving the charging information of the calling user, modify content of the charging information, and send the content of the charging information as part of the session request to a server B of the second operator; wherein
the server A of the first operator is configured to subtract its own rate and apply deduction from income of the second operator.

The system further includes:
a fourth unit, configured to store the charging rule.

As can be seen from the above technical scheme, a user may set a desired rate, fee, or call duration, thereby implementing the management of services.

A transfer of charging information between a user and an operator makes it possible to transfer the charging information between operators, so as to enable the operator to provide the user with charging information according to charging information provided by other operators In addition, the fee status may be gotten in real time due to the combination of the charging and a specific session. For example, a user may get charging information before, during and after a session, and may refuse the session before initiating the session, or terminate the session during the session so as to save fees.

With a specific charging rule, both users and operators may do a charge calculation to check up the account. Because of setting a ceiling through repayment, and setting a desired fee or duration, the user may better control the call fee or duration.

### Brief description of the drawings

FIG. 1 is a structure diagram of an INVITE message according to embodiments of the present invention.
FIG. 2 is a simplified flowchart illustrating the session processing of charging a calling user according to an embodiment of the present invention.
FIG. 3 is a simplified flowchart illustrating the session processing of charging a called user according to an embodiment of the present invention.
FIG. 4 is a simplified flowchart illustrating the session processing of charging for an additional rate service according to an embodiment of the present invention.
FIG. 5 is a simplified schematic diagram illustrating a device for processing session according to an embodiment of the present invention.

### Detailed description of the invention

In an NGN, it is an SIP that is frequently used for communications due to its flexibility. The SIP, defined by the Internet Engineering Tasking Force (IETF), is a session control protocol with simplicity and rich expansibility, and is a basic protocol of the NGN. Embodiments of the present invention are described based on, but not limited to, the SIP.

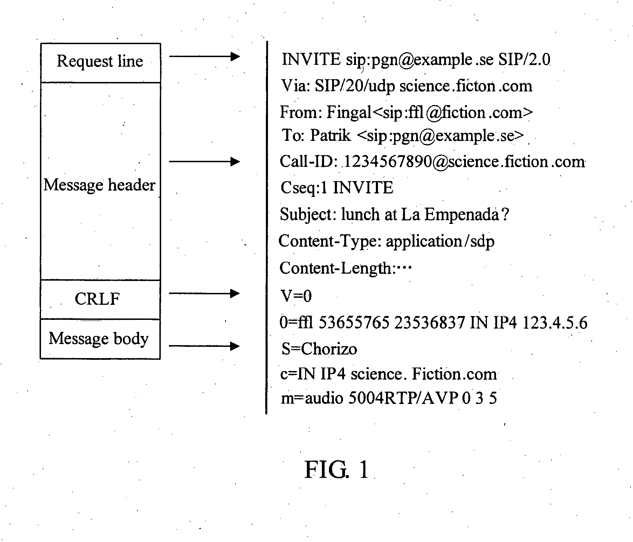

The SIP, not depending on underlying layer protocols, is a text-based application layer control protocol, and is used to establish, modify and terminate two-party or multi-party multimedia sessions in an Internet Protocol (IP) network. The SIP borrows ideas from the Hyper Text Transfer Protocol (HTTP), Simple Mail Transfer Protocol (SMTP) and the like, supports such functions as agent, re-determination of direction, registering and locating users, etc., and supports user mobility. When cooperating with such protocols as Real time Transport Protocol/Real time Control Protocol (RTP/RTCP), Service Description Protocol (SDP), Real Time Streaming Protocol (RTSP) and Domain Name Service (DNS), the SIP may realize such services as voice, video, data, mail, real time communication, chat, etc. An SIP message is based on the text mode, and typically includes a request line, a message header, a Carriage Return, Line Feed (CRLF), and a message body. For example, a structure of a request message (INVITE) based on the SIP is shown in FIG. 1.

In the SIP, information related to charging function has not been defined, and the account settlement mode mentioned in "Background of the invention" is still used at present when the communication is based on the SIP, so similar problems to that mentioned in "Background of the invention" still exist. The charging method according to this invention is described below in detail.

For realizing the charging method of this invention, the SIP is improved, namely a charging information byte, i.e., Charge (called Session Charge Protocol) is added. The charging information includes: fee information (Fee), volume information (Volume) and rate information (Rate). For example, a Charge may include zero or one Fee, zero or multiple Volume, and zero or multiple Rates. In the charging information, the fee, volume and rate are associated. The fee may be figured out according to the volume and rate, and the simplest case is volume*rate=fee. In the case of multiple rates and volume, their products are summated.

In detail, the Fee, Volume and Rate included in the Charge mentioned above may be finalized below.

Merely by way of an example, the Fee includes two parts, Currency meaning currency type and Amount meaning the amount of money, wherein the Currency is expressed by the letter format specified in International Standards Organization (ISO) 4217 and the Amount is expressed by a figure. For example, for RMB 1 yuan 1 jiao 9 fen, "CNY" for expressing RMB is filled in the Currency part and "1.19" in the Amount part. A positive fee value in a message sent may mean that a Charge message sender server pays the receiver server; and a negative one means the Charge message sender server charging the receiver server. The servers mean servers provided by different operators.

Merely by way of an example, the Volume includes two parts: UnitID meaning a unit used in charging and Amount meaning volume used. The UnitID is represented by a figure: 0-Undefined, 1-the number of times, 2-byte, 3-second, which may be extended to represent other units. For example, for the volume of 100 bytes, "2" is filled in the UnitID part, and "100" in the Amount part.

Merely by way of an example, the Rate includes four items of information: Currency meaning currency type, Amount meaning the amount of money, UnitID meaning a unit used in charging and Amount meaning volume used. In the case of multiple Rates, charging is performed by the corresponding Rates in turn according to the Amount meaning volume used (such as time), and the last Rate is taken as a subsequent rate for the charging. For example, that the Amounts are 180, 120 and 60 respectively corresponding to Rate1, Rate2 and Rate3 means that the rate is Rate1 for the first 180 seconds, Rate2 for the subsequent 120 seconds, Rate3 for the further subsequent 60 seconds, and keeps Rate3 afterwards.

When carried in the SIP, the Charge may be contained in a message header through adding a header field, or in an SIP message body, as shown in FIG. 1. An INVITE message containing charging information is shown below, in which a part written in italics is the added Charge header field, and the content of charging information is filled in the part. In the INVITE message, the contained charging information means that the fee is RMB 0.32 yuan, the volume is 270 seconds, the rate is 0.20 yuan for the first 3 minutes and 0.06 fen per minute afterwards.

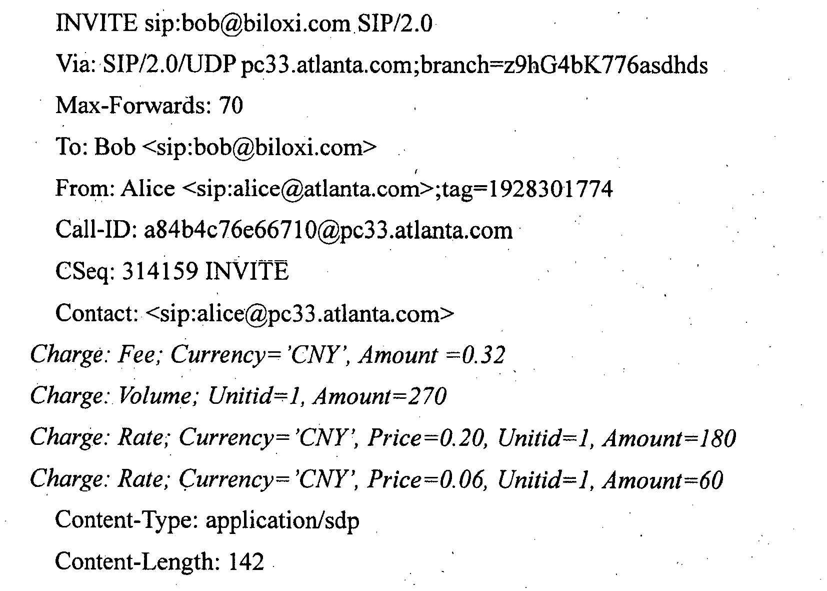

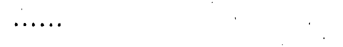

Charging information also may be carried through adding three header fields, i.e., Fee, Volume and Rate, instead of the above Charge header field, and the three header fields is shown below:

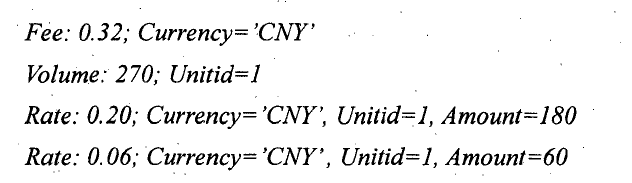

Meanings of charging information carried in the SIP are described as below.

INVITE is used to carry charging information when a call is requested, and means that an SIP client is willing to pay. During the call, the charging information may also be resent via an INVITE message.

200 OK corresponds to 200 OK of INVITE. That charging information is contained in a response message means that an SIP server has accepted the request of the SIP client, and carried the charging information in the response message. The rate and amount in the charging information are less than those in the INVITE message sent from the SIP client.

402 Payment Required is used to contain charging information in a payment request, and means that the SIP server does not accept the charging information in the INVITE message sent from the SIP client, and returns the charging information of the SIP server with a rate higher than that in the charging information contained in the INVITE message sent from the SIP client. The SIP client may resend an INVITE message after prompting the user.

BYE is used to carry actual charging information for this session after a call is over.

200 OK corresponds to 200 OK of BYE, and is used to carry the actual charging information of this session.

Charging information may be contained in other extended messages of the SIP, e.g., an extended SUBSCRIBE message in the SIMPLE protocol (SIP for Instant Messaging and Presence Leveraging Extensions), and the illustration is no longer made.

Through the Charge, the charging information may be transferred between the user equipment and the server, so as to realize the control of the user on a call fee and the display of fee information to the user, and a description in detail is given below.

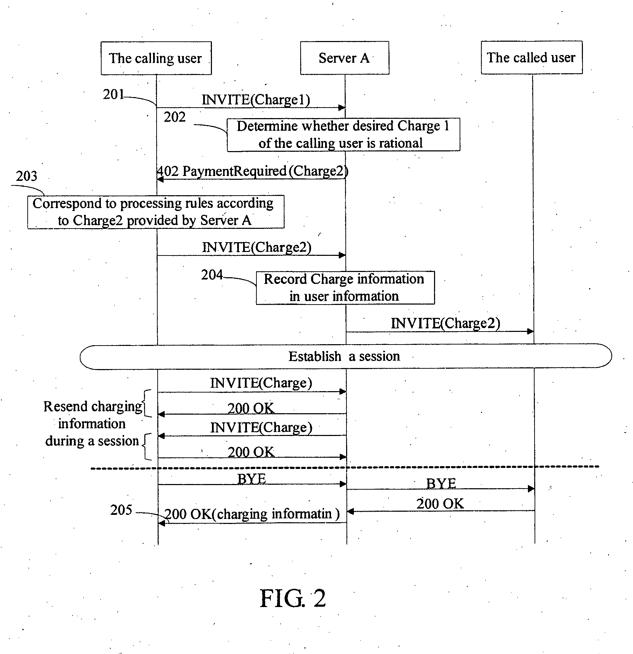

A session processing of charging a calling user according to desired charging information of the calling user is described through an example of the calling user calling the called user, referring to FIG. 2.

Step 201: the calling user equipment initiates a call, and sends an INVITE message to Server A. A charging information byte, i.e., Charge, is contained in the INVITE message to represent desired charging information of the calling user. In the call, the meanings of parameters included in the Charge are as follows: the Fee represents a fee the calling user is willing to pay; the Volume, desired maximum volume of the calling user for this call; the Rate, a desired rate of the calling user.

In the Charge, one or two of the Fee, Volume and Rate also may be included. For example, only the Fee being included represents a total fee that the calling user is willing to pay for this call and accepting the rate of the operator; only the Volume represents maximum volume that the calling user is willing to take for this call (such as duration) and accepting the rate and fee of the operator; only the Rate represents a desired rate of the calling user for this call.

The calling user equipment may prestore a charging rule table as shown in Table 1. When initiating an INVITE message, the calling user equipment reads the stored charging rule table, matches the charging rules to specific rules, reads charging information corresponding to the specific rules, and fills the read charging information in the INVITE message. If the calling user does not set charging rules or does not match the charging rules to the specific rules, he fills an empty Charge header field in the INVITE message instead of a specific value, e.g., Charge: Fee, to represent that the calling user is willing to accept the charging rules provided by the server.

**Table 1**

| Rule | Fee | Volume | Rate |
|---|---|---|---|
| Calling the called user tom@)jack.com | 2 yuan | 1 minute | 1 yuan/minute |
| The superior operator is abc (abc is the operator trusted by the user) | 100 yuan | 1 minute | 100 yuan/minute |
| Other cases | 0.1 yuan | 1 minute | 0.1 yuan/minute |

Certainly, the calling user equipment may provide the calling user with a dialog box to input charging information when initiating a call.

As shown below, an INVITE message is generated when the user Alice calls her superior operator server in Atlanta so as to call the called user bob@biloxi.com. The call meets the rule "other cases" in above Table 1, which means that the calling user is only willing to pay RMB 0.1 yuan, call for 1 minute, and only accept a rate less than RMB 0.1/minute. The INVITE message is as:

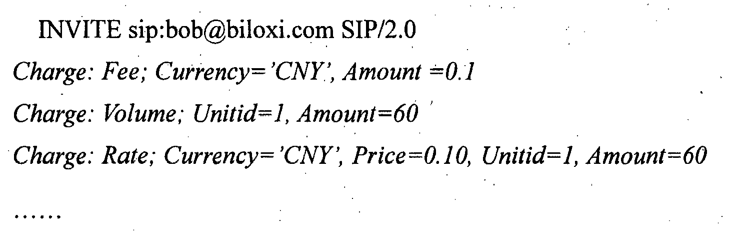

Certainly, if the calling user equipment asks the server to provide charging information when initiating a call, in Step 201, the message sent from the calling user equipment may not include the desired charging information of the calling user but a field for asking the server to return the charging rules information to the calling user equipment. For example, 402 Payment Required may be added respectively in a Supported header field of INVITE message and a Require header field. An INVITE message with the request field is shown below.

```
  .....
.
  INVITE sip:bob@biloxi.com SIP/2.0
  Supported: 402 Payment Required
  Require: 402 Payment Required
  .....
```

Step 202: Server A receives the INNITE message, reads the charging information of the calling user equipment, and determines whether the charging information is reasonable; if it is, the process proceeds to Step 204, or else, Server A returns to the calling user equipment a response message with the charging rules of Operator 1 recorded in Server A.

Server A determines whether the parameters of the charging information in the INVITE message (i.e., Fee, Volume and Rate) are reasonable. When only a parameter exists in the charging information, the comparison is made only for the parameter; when two or more parameters exist, comparison needs to be made for all parameters.

For example, when only the Rate exists in the INVITE message exists, if the fee figured out in any case of the volume according to the desired rate of the calling user is not less than that according to the rate of the operator, the rate is considered reasonable, e.g., desired 0.12 yuan/minute of the calling user and 0.1 yuan/minute provided by the operator; otherwise, the rate is unreasonable, e.g., if the calling user desires a rate of 0.12 yuan/minute and requests call duration of two minutes, while the operator provides 0.3 yuan/3 minute, the fee will be 0.24 yuan according to the rate of the calling user, and 0.3 yuan according to the rate of the operator, so the rate requested by the calling user is unreasonable.

. For another example, when only the Fee exists, if the fee is more than a minimum call fee requested by the operator, e.g., in the case of 0.3 yuan/3 minute, the minimum call fee is 0.3 yuan, the fee is reasonable; otherwise, the fee is unreasonable.

Eventually, for example, when at least two of Rate, Fee and Volume exist in the INVITE message, the rate, fee and volume all may be figured out, in this case, not only the rate but also the fee has to be compared. For example, after the desired fee of the calling user is considered reasonable, the rate is further determined whether reasonable or not. Unless both the fee and the rate are reasonable, this charging rule is not considered reasonable. Certainly, if the calling user is a prepayment user, the operator equipment still has to determine whether the fee of the calling user exceeds a credit line, and the charging information is reasonable only if the fee is within the credit line.

If the server determines that the charging information is unreasonable, the returned response message also contains the charging rule information whose parameters means: the Rate represents a rate requested by the operator; the Fee and Volume represent a desired fee and volume of the calling user (according to the first user request, if there is no volume in the first user request or the volume is less than the minimum volume accepted by the operator, a minimum charging unit may be responded to the calling user equipment). The shown below is a response message returned from Server A, which includes a charging rule set by Operator 1: a rate of 0.20 yuan for the first three minutes and 0.06 fen per minutes for later, minimum call duration of 180 seconds, and a minimum fee of 0.20 yuan. SIP/2.0 402 Bad charge

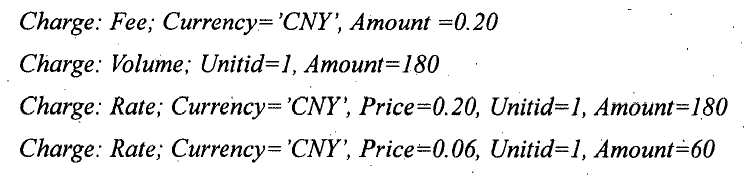

Step 203: the calling user equipment receives the response message from Server A, reads the charging information provided by the operator, and matches the charging information to preset processing rules to carry out a corresponding processing.

The preset processing rules may be shown as Table 2 below. The calling user equipment reads the fee, volume and rate from the response message, matches them with the processing rules in FIG. 2, and carries out a corresponding processing.

**Table 2**

| Rule | Processing rule |
|---|---|
| Fee is more than 10 yuan | Reject directly without reminding |
| Fee is less than 0.1 yuan | Accept directly without user confirmation |
| Rate is higher than 0.1 yuan/minute | Accept with user confirmation |
| Volume is less than 1 minute | not accept |

The rules may be set according to other conditions, e.g., a role in a session (the called or the calling) and an ID of the other party (certified through an ID, such as a friend list, password certification).

In addition, charging information or prompting information of the processing rules may be provided to the calling user to prompt simple information in terms of word, graphic and voice modes. For example, if the fee exceeds the one in the rules set by the calling user, user confirmation is needed. In this case, graphics flashes on the calling user equipment with a sound and word information related to the calling user.

In the example, after receiving the message of Server A of the Operator 1, if the rule of "Rate is higher than 0.1 yuan/minute" is met, the calling user equipment prompts the calling user. After the calling user confirms to accept, the calling user equipment reinitiates an INVITE message. The charging information forwarded by Server A through a response message is filled in the INVITE message to represent charging information of Operator 1. The INVITE message is shown below:

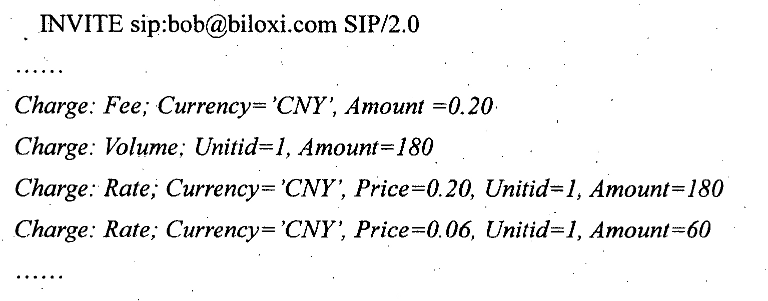

Certainly, after the calling user confirms to accept, when the calling user equipment reinitiates an INVITE message, an empty Charge header field, such as Charge: Fee, may be filled in the SIP as shown in Step 201 to express that the calling user accepts the charging rules provided by the server.

Step 204: in this way, after receiving the INVITE message and determining as a reasonable charging rule, the Server A continues processing the call request, establishes a session between the calling user equipment and the called user equipment, and records the Fee and Volume in the Charge provided by the calling user.

During the session, the charging information will be resent in the following cases:
1) the volume or fee for the session will exceed the recorded desired volume or fee of the calling user;
2) the fee has changed;
3) other information related to the session has changed, for example, the Quality of Service (QoS) is reduced, but the fee is unchanged, in this case, the calling user needs to reconfirm.

Both a user equipment and a server may resend to the other party charging information, which is determined whether reasonable or not by the other party. For example, when the rate, fee and volume exceed those set for the current session, the user is prompted to resend the charging information or the session is cut off automatically. Thus, the user may preset his call duration or fee before initiating a session so as to control the session.

For example, if the call duration exceeds three minutes, the calling user equipment prompts the calling user; after the calling user confirms, the calling user equipment reinitiates an INVITE message. The process also may be performed according to the rules set by the user: when the rate is unchanged, user confirmation is not needed, and an INVITE message is reinitiated automatically; more volume is filled in the Charge, e.g., another 10 minutes prolonged, so the "13 minutes" is filled in the Volume (3 minutes plus 10 minutes); the fee is increased accordingly, and "0.80 yuan" filled in the Fee. The INVITE message is shown below:

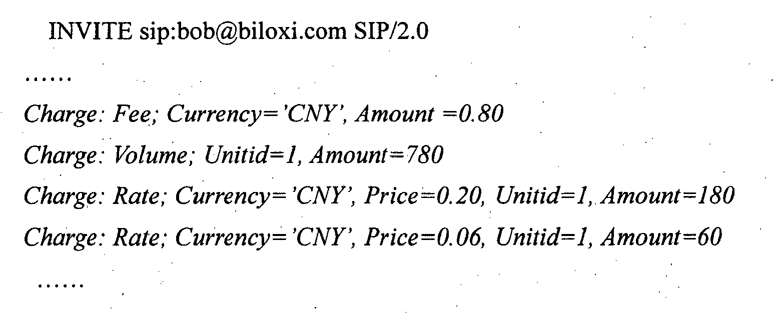

After receiving the INVITE message, if the charging information is considered reasonable, Server A of Operator 1 will accept the request of the calling user, do not cut off the session and respond to the calling user equipment with 200 OK.

Step 205: after the session ends, the calling user equipment and Server A may calculate the fee according to the volume and rate and record it in a storage unit, in this case, the volume represents the actual volume already used up for the session, the fee represents the actual fee for the session, and the rate means the rate of the session. Server A sends the fee information of the session to the calling user equipment (e.g., contained in 200 OK), the calling user equipment prompts the calling user with charging information, compares the charging information with that of the calling user equipment, and reserves the fee after a confirmation.

Only the fee processing between the calling user equipment and the server is described above. For two or more operators are involved in a session, Server A still has to modify and send the content of fee, and servers of other operators receive the charging information and determine whether it is reasonable; only when all servers consider the fee reasonable, the session between the calling user equipment and the called user equipment may be established.

For example, the calling user calls the called user, and the charging information sent from the calling user equipment to the Server A of Operator 1 includes: 0.2 yuan/minute, Operator 1 charging 0.06 yuan per minute and taken a 10 % deduction from the income of Operator 2. In this way, Server A, after receiving the charging information of the calling user, figures out the maximum fee that Operator 2 may charge is 0.127 yuan/minute, i.e., (0.2-0.06)/110%=0.127. In the message sent from Server A to Server B of Operator 2, "0.127 yuan/minute" is filled in the Rate, and the fee is also processed appropriately.

The server of Operator 2, after receiving the charging information, makes a calculation and comparison according to the charging rules set by itself, with reference to Step 202, to decide whether the charging information is reasonable. Operator 2 may return charging information to Operator 1 through the charging information, Operator 1 then makes a corresponding calculation and returns charging information figured out to the calling user. For example, the charging rate returned by Operator 2 is 0.1 yuan/minute, the charging rate returned by Operator 1 is 0.17 yuan/minute, and 0.1 +0.1×10%+0.06=0. 17.

Moreover, if multiple operators are concerned, the session also may be initiated by an operator server instead of a user equipment, for example, operator server initiatively initiates a session to provide services to a user.

As can be seen, during a charging, a user may send information such as call duration, fee information, etc., and a server controls the call duration and total fee according to the information sent by the user. In addition, it may be displayed to the user how each operator charges.

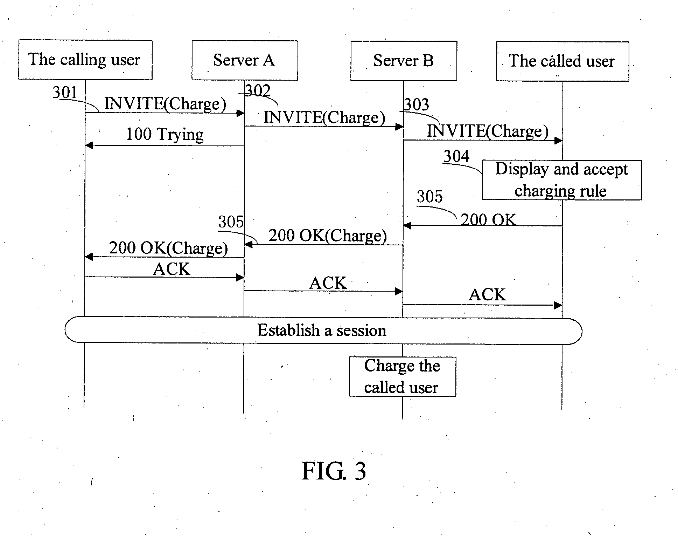

According to another example with the called user charged, this invention is further described below in detail with reference to FIG. 3, wherein there is an account of the called user recorded in Server B of Operator 2. The following steps are included:
Step 301: the calling user equipment calls Server A of Operator 1, and the carried Charge includes: the rate is 0 yuan/minute, which means that the calling user asks to get a free call.
Step 302: Server A asks to charge 0.06 yuan/minute, so it processes the charging information, namely, changes the rate to -0.06 yuan/minute, and sends the charging information to Server B of Operator 2. The negative sign means that Operator 1 charges Operator 2.
Step 303: Server B still asks to charge 0.1 yuan/minute, so it changes the rate to -0.16 yuan/minute, which means charging the user 0.16 yuan/minute, and forwards the session request containing the charging information to the called user.
Step 304: the called user equipment displays the charging information: the called user needs to pay -0.16 fen/minute. After the charging information is confirmed by the called user, or automatically confirmed by the called user equipment according to rules preset by the called user (may be shown as Table 2 above), the called user equipment sends a response message containing -0.16 fen/minute to Server B to express an agreement on paying and accepting the rate. The volume, i.e., call duration, or the desired fee of the called user is also contained in the Charge of the response message and sent to Server B together.
Step 305: Server B responds to Server A, and Server A considers the session request of the calling user reasonable and may establish the session between the calling user and the called user.

Meanwhile, Server B processes the charging according to the corresponding charging rules, makes a fee deduction from a recorded account of the called user, figures out the fee that the Operator 1 shall share, and performs the account settlement between operators.

In addition, when the call duration or the fee deducted by Server B is up to that in the response message from the called user equipment, the called user is prompted to resend charging information to continue session or terminate the current session.

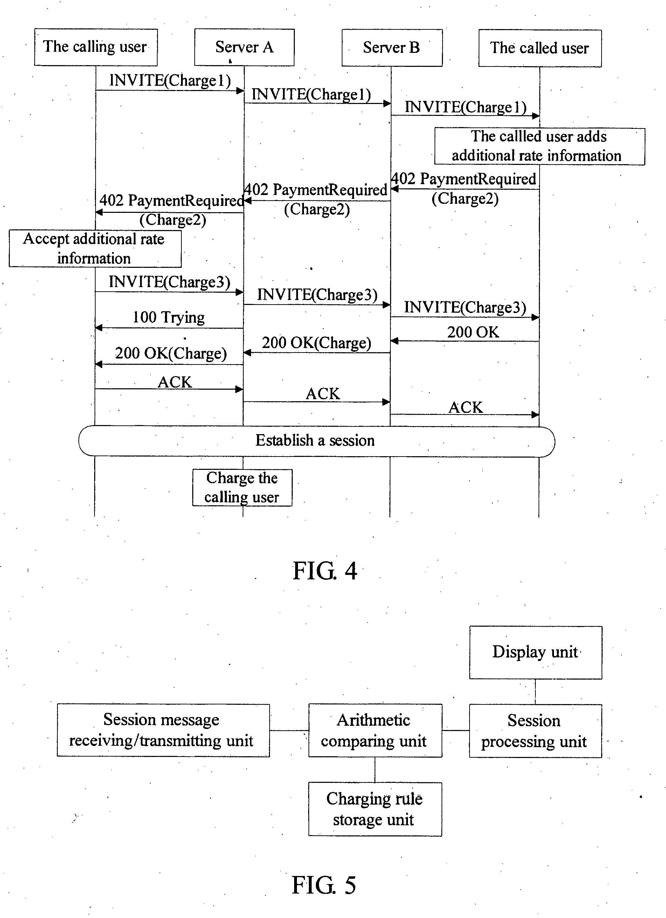

A session processing of charging for an additional rate service is shown in FIG. 4. The additional rate service means a session in which the calling user needs to pay the called user. For example, the called user equipment is used for hot-wire, consultation, order programme, etc. In this embodiment, the rate may be contained in the message responded by the called user equipment (may be a Server C provided by a third operator). Operator 2 and Operator 1 summate the rates, the calling user equipment prompts the rates to the calling user, and sends the charging information about the rate until the calling user confirms. When Operator 1, Operator 2 and the called user all consider the charging reasonable, the session may be processed.

Correspondingly, as shown in FIG. 5, a device for processing session is also provided, which may be a user equipment or a server. The device includes: a session receiving/transmitting unit, for receiving and transmitting session information; a charging rule storage unit, for storing charging rules; an arithmetic comparing unit connected with the session receiving/transmitting unit and the charging rule storage unit, for reading and comparing the received charging information from the session receiving/transmitting unit and the charging rule storage unit; and a session processing unit connected with the arithmetic comparing unit, for processing session according to the received comparing results from the arithmetic comparing unit. A display unit is also included which connects with the session processing unit for displaying the charging information or session processing information to the user.

As can be seen from the embodiments, the user may conveniently control the fee, call duration, or rate of a session according to input information (such as a fee and volume), and each server may perform the fee processing respectively according to the charging information transferred between servers of various operators.

The user equipment and the server are differentiated above for better description. In the SIP, when the user equipment and the server communicate, the SIP operator server may serve as a client to initiate a call to another server, just as the user equipment.

The above descriptions are all exemplified by communications based on SIP. As shown above, charging information may also be carried in terms of an Extensible Mark-up Language (XML) format. Although all examples are based on the SIP, it is not difficult to understand that the present invention may be used in other network protocols which are not limited to the SIP protocol or SIP extended protocols, for example, this invention may be applied in a Hyper Text Transfer Protocol (HTTP) to access Web, or in a Video On Demand (VOD).

## Claims

1. A method for processing a session, comprising:
receiving (201), by a session server, a session request comprising first charging information from a session initiator, wherein the first charging information comprises a fee or volume desired by a calling user;
continuing processing (202, 204), by the session server, the call request if the session server determines that the first charging information is reasonable according to a charging rule stored in the session server, **characterized in that** the first charging information being reasonable comprises at least one of: the fee or volume desired by the calling user in the first charging information not being less than a minimum fee or volume in the charging rule stored in the session server, and the rate desired by the calling user not being lower than a minimum rate in the charging rule stored in the session server; the method further comprises:
determining a fee or volume of the session after putting through the session, and terminating the session or prompting the calling user to resend second charging information comprising new fee or volume if the fee or volume of the session exceeds the fee or volume desired by the calling user;
transferring charging information between a first operator and other operators, and providing, by the first operator, the calling user with charging information according to charging information provided by other operators; and
receiving, by servers of other operators, the charging information, determining whether the charging information is reasonable, and when all the servers consider the fee reasonable, establishing a session between the calling user equipment and a called user equipment; wherein
the step of transferring charging information between a first operator and other operators, and providing, by the first operator, a user with charging information according to charging information provided by other operators comprises:
after receiving the charging information of the calling user, figuring out, by a server A of the first operator, a maximum fee that a second operator charges, modifying content of the charging information, and sending the content of the charging information as part of the session request to a server B of the second operator; wherein
the step of figuring out, by a server A of the first operator, a maximum fee that a second operator charges comprises:
subtracting, by the server A of the first operator, its own rate and applying deduction from income of the second operator.

2. The method of Claim 1, the first charging information further comprises a rate desired by the calling user; the method further comprising:
terminating the session or prompting the calling user to resend a second charging information comprising a new rate if the other information of the session changes during the session.

3. The method of Claim 2, wherein the first charging information being reasonable further comprises:
if the first communication unit is a prepayment user, a balance of prepayment account of the calling not exceeding a credit line.

4. The method of Claim 1, wherein the session initiator stores charging rules corresponding to different sessions; and
receiving the session request comprises:
reading, by the session initiator, a charging rule corresponding to the session and generates the first charging information according to the charging rule corresponding to the session; and
receiving, by the session server, the session request comprising the first charging information from the session initiator.

5. The method of Claim 4, wherein the charging rules corresponding to different
sessions comprises
charging rules corresponding to different called users.

6. The method of Claim 1, wherein the first charging information comprises flag information for requesting the session server to send the charging rule to the session initiator; the method further comprising:
receiving (203), by the session initiator, the charging rule from the session server, taking the charging rule as the first charging information, and sending a new session request to the session server, wherein the first charging information in the new session request comprises flag information for indicating agreement on the charging rule.

7. The method of Claim 1, further comprising:
prompting, by the session initiator, the calling user to resend the second charging information, and sending the second charging information to the session server after obtaining a confirmation from the calling user.

8. The method of Claim 1, further comprising:
providing (205) charging information to the session initiator to display to the calling user during the session or after the session.

9. A system for processing a session, comprising:
a first unit, configured to receive a session request comprising first charging information from a session initiator, wherein the first charging information comprises a fee or volume desired by a calling user;
a second unit, configured to continue processing the call request if the second unit determines that the first charging information is reasonable according to a charging rule, **characterized in that** the first charging information being reasonable comprises at least one of: the fee or volume desired by the calling user in the first charging information not being less than a minimum fee or volume in the charging rule stored in the session server, and the rate desired by the calling user not being lower than a minimum rate in the charging rule stored in the session server; the system further comprises:
a third unit, configured to determine a fee or volume of the session after the second unit puts through the session, and terminate the session or prompt the calling user to resend second charging information comprising new fee or volume if the fee or volume of the session exceeds or will exceed the fee or volume desired by the calling user; wherein
charging information is transferred between a first operator and other operators, and the first operator provides the calling user with charging information according to charging information provided by other operators;
servers of other operators are configured to receive the charging information, and determine whether the charging information is reasonable, and when all the servers consider the fee reasonable, a session between the calling user equipment and a called user equipment is established;
a server A of the first operator is configured to figure out a maximum fee that a second operator charges after receiving the charging information of the calling user, modify content of the charging information, and send the content of the charging information as part of the session request to a server B of the second operator; wherein
the server A of the first operator is configured to subtract its own rate and apply deduction from income of the second operator.

10. The system of Claim 9, further comprising:
a fourth unit, configured to store the charging rule.

## Patentansprüche

1. Verfahren zum Verarbeiten einer Sitzung, das Folgendes umfasst:
Empfangen (201) einer Sitzungsanforderung, die erste Gebührenberechnungsinformationen umfasst, durch einen Sitzungsserver von einem Sitzungsinitiator, wobei die ersten Gebührenberechnungsinformationen eine Gebühr oder ein Volumen, die/das von einem anrufenden Anwender gewünscht wird, umfasst;
Weiterführen der Verarbeitung (202, 204) der Verbindungsanforderung durch den Sitzungsserver, wenn der Sitzungsserver bestimmt, dass die ersten Gebührenberechnungsinformationen gemäß einer Gebührenberechnungsregel, die in dem Sitzungsserver gespeichert ist, plausibel sind, **dadurch gekennzeichnet, dass** die Plausibilität der ersten Gebührenberechnungsinformationen wenigstens eines des Folgenden umfasst: die Gebühr oder das Volumen, die/das von dem anrufenden Anwender in den ersten Gebührenberechnungsinformationen gewünscht ist, nicht kleiner ist als eine minimale Gebühr oder ein minimales Volumen in der Gebührenberechnungsregel, die in dem Sitzungsserver gespeichert ist, und der Tarif, der von dem anrufenden Anwender gewünscht ist, nicht niedriger ist als ein minimaler Tarif in der Gebührenberechnungsregel, die in dem Sitzungsserver gespeichert ist; wobei das Verfahren ferner Folgendes umfasst:
Bestimmen einer Gebühr oder eines Volumens der Sitzung nach dem Durchschalten der Sitzung und Beenden der Sitzung oder Auffordern des anrufenden Anwenders, erneut zweite Gebührenberechnungsinformationen zu senden, die eine neue Gebühr oder ein neues Volumen umfassen, wenn die Gebühr oder das Volumen der Sitzung die Gebühr oder das Volumen übersteigt, die/das von dem anrufenden Anwender gewünscht ist;
Übertragen der Gebührenberechnungsinformationen zwischen einem ersten Betreiber und
weiteren Betreibern und Versorgen des anrufenden Anwenders mit Gebührenberechnungsinformationen gemäß den Gebührenberechnungsinformationen, die von anderen Betreibern bereitgestellt werden, durch den ersten Betreiber; und
Empfangen der Gebührenberechnungsinformationen durch Server anderer Betreiber, Bestimmen, ob die Gebührenberechnungsinformationen plausibel sind, und wenn alle Server die Gebühr als plausibel betrachten, Aufbauen einer Sitzung zwischen dem Gerät des anrufenden Anwenders und einem Gerät des angerufenen Anwenders; wobei der Schritt des Übertragens der Gebührenberechnungsinformationen zwischen einem ersten Betreiber und weiteren Betreibern und des Versorgens eines Anwenders durch den ersten Betreiber mit Gebührenberechnungsinformationen gemäß den Gebührenberechnungsinformationen, die von anderen Betreibern bereitgestellt werden,
Folgendes umfasst:
Berechnen durch einen Server A des ersten Betreibers einer maximalen Gebühr, die ein zweiter Betreiber erhebt, nach dem Empfangen der Gebührenberechnungsinformationen des anrufenden Anwenders, Modifizieren des Inhalts der Gebührenberechnungsinformationen und Senden des Inhalts der Gebührenberechnungsinformationen als Teil der Sitzungsanforderung zu einem Server B des zweiten Betreibers; wobei
der Schritt des Berechnens einer maximalen Gebühr, die ein zweiter Betreiber erhebt, durch einen Server A des ersten Betreibers Folgendes umfasst:
Subtrahieren seines eigenen Tarifs und Anwenden eines Abzugs vom Einkommen des zweiten Betreibers durch den Server A des ersten Betreibers.

2. Verfahren nach Anspruch 1, wobei die ersten Gebührenberechnungsinformationen ferner einen Tarif umfassen, der von dem anrufenden Anwender gewünscht wird; wobei das Verfahren ferner Folgendes umfasst:
Beenden der Sitzung oder Auffordern des anrufenden Anwenders, zweite Gebührenberechnungsinformationen erneut zu senden, die einen neuen Tarif umfassen,
wenn sich die anderen Informationen der Sitzung während der Sitzung ändern.

3. Verfahren nach Anspruch 2, wobei die Plausibilität der ersten Gebührenberechnungsinformationen ferner Folgendes umfasst:
ein Guthaben des Vorauszahlungskontos des anrufenden Anwenders eine Kreditlinie nicht übersteigt, wenn die erste Kommunikationseinheit ein Anwender mit Vorauszahlung ist.

4. Verfahren nach Anspruch 1, wobei der Sitzungsinitiator Gebührenberechnungsregeln speichert, die unterschiedlichen Sitzungen entsprechen; und
Empfangen der Sitzungsanforderung Folgendes umfasst:
Lesen einer Gebührenberechnungsregel, die der Sitzung entspricht, durch den Sitzungsinitiator und Erzeugen der ersten Gebührenberechnungsinformationen gemäß der Gebührenberechnungsregel, die der Sitzung entspricht; und
Empfangen der Sitzungsanforderung, die die ersten Gebührenberechnungsinformationen umfasst, durch den Sitzungsserver von dem Sitzungsinitiator.

5. Verfahren nach Anspruch 4, wobei die Gebührenberechnungsregeln, die unterschiedlichen Sitzungen entsprechen, Gebührenberechnungsregeln umfassen, die unterschiedlichen angerufenen Anwendern entsprechen.

6. Verfahren nach Anspruch 1, wobei die ersten Gebührenberechnungsinformationen Kennzeicheninformationen zum Anfordern, dass der Sitzungsserver die Gebührenberechnungsregel zu dem Sitzungsinitiator sendet, umfassen; wobei das Verfahren ferner Folgendes umfasst:
Empfangen (203) der Gebührenberechnungsregel von dem Sitzungsserver durch den Sitzungsinitiator, Annehmen der Gebührenberechnungsregel als die ersten Gebührenberechnungsinformationen und Senden einer neuen Sitzungsanforderung zu dem Sitzungsserver, wobei die ersten Gebührenberechnungsinformationen in der neuen Sitzungsanforderung Kennzeicheninformationen zum Angeben einer Vereinbarung über die Gebührenberechnungsregel umfassen.

7. Verfahren nach Anspruch 1, das ferner Folgendes umfasst:
Auffordern des anrufenden Anwenders durch den Sitzungsinitiator, die zweiten Gebührenberechnungsinformationen erneut zu senden, und Senden der zweiten Gebührenberechnungsinformationen zu dem Sitzungsserver nach dem Erhalten einer Bestätigung von dem anrufenden Anwender.

8. Verfahren nach Anspruch 1, das ferner Folgendes umfasst:
Bereitstellen (205) von Gebührenberechnungsinformationen für den Sitzungsinitiator, um sie für den anrufenden Anwender während der Sitzung oder nach der Sitzung anzuzeigen.

9. System zum Verarbeiten einer Sitzung, das Folgendes umfasst:
eine erste Einheit, die konfiguriert ist, eine Sitzungsanforderung, die erste Gebührenberechnungsinformationen umfasst, von einem Sitzungsinitiator zu empfangen,
wobei die ersten Gebührenberechnungsinformationen eine Gebühr oder ein Volumen, das von einem anrufenden Anwender gewünscht wird, umfasst;
eine zweite Einheit, die konfiguriert ist, das Verarbeiten der Verbindungsanforderung fortzusetzen, wenn die zweite Einheit bestimmt, dass die ersten Gebührenberechnungsinformationen gemäß einer Gebührenberechnungsregel plausibel sind, **dadurch gekennzeichnet, dass** die Plausibilität der ersten Gebührenberechnungsinformationen wenigstens eines aus Folgendem umfasst: die Gebühr oder das Volumen, die/das von dem anrufenden Anwender in den ersten Gebührenberechnungsinformationen gewünscht ist, nicht kleiner ist als eine minimale Gebühr oder ein minimales Volumen in der Gebührenberechnungsregel, die in dem Sitzungsserver gespeichert ist, und der Tarif, der von dem anrufenden Anwender gewünscht ist, nicht niedriger ist als ein minimaler Tarif in der Gebührenberechnungsregel, die in dem Sitzungsserver gespeichert ist; wobei das System ferner Folgendes umfasst:
eine dritte Einheit, die konfiguriert ist, eine Gebühr oder ein Volumen der Sitzung zu bestimmen, nachdem die zweite Einheit die Sitzung durchschaltet, und die Sitzung zu beenden oder den anrufenden Anwender aufzufordern, erneut zweite Gebührenberechnungsinformationen zu senden, die eine neue Gebühr oder ein neues Volumen umfassen, wenn die Gebühr oder das Volumen der Sitzung die Gebühr oder das Volumen übersteigt, die/das von dem anrufenden Anwender gewünscht ist; wobei Gebührenberechnungsinformationen zwischen einem ersten Betreiber und weiteren Betreibern übertragen werden, und der rufende Anwender durch den ersten Betreiber mit Gebührenberechnungsinformationen gemäß den Gebührenberechnungsinformationen, die von anderen Betreibern bereitgestellt werden, versorgt wird;
Server anderer Betreiber konfiguriert sind, die Gebührenberechnungsinformationen zu empfangen und zu bestimmen, ob die Gebührenberechnungsinformationen plausibel sind,
und wenn alle Server annehmen, dass die Gebühren plausibel sind, eine Sitzung zwischen dem Gerät des anrufenden Anwenders und einem Gerät des angerufenen Anwenders aufgebaut wird;
ein Server A des ersten Betreibers konfiguriert ist, nach Empfangen der Gebührenberechnungsinformationen von dem anrufenden Anwender eine maximale Gebühr zu berechnen, die ein zweiter Betreiber erhebt, den Inhalt der Gebührenberechnungsinformationen zu modifizieren und den Inhalt der Gebührenberechnungsinformationen als Teil der Sitzungsanforderung zu einem Server B des zweiten Betreibers zu senden; wobei
der Server A des ersten Betreibers konfiguriert ist, seinen eigenen Tarif zu subtrahieren und Abzug von dem Einkommen des zweiten Betreibers anzuwenden.

10. System nach Anspruch 9, das ferner Folgendes umfasst:
eine vierte Einheit, die konfiguriert ist, die Gebührenberechnungsregel zu speichern.

## Revendications

1. Procédé de traitement d'une session, comprenant :
la réception (201), par un serveur de session, d'une demande de session comprenant des premières informations de facturation provenant d'un initiateur de session, les premières informations de facturation comprenant une redevance ou un volume souhaité par un utilisateur appelant ;
la poursuite du traitement (202, 204), par le serveur de session, de la demande d'appel si le serveur de session détermine que les premières informations de facturation sont raisonnables conformément à une règle de facturation stockée sur le serveur de session, **caractérisé en ce que** le fait que les premières informations de facturation sont raisonnables comprend au moins l'un : du fait que la redevance ou le volume souhaité par l'utilisateur appelant dans les premières informations de facturation n'est pas inférieur à une redevance ou à un volume minimum dans la règle de facturation stockée sur le serveur de session, et le fait que le tarif souhaité par l'utilisateur appelant n'est pas inférieur à un tarif minimum dans la règle de facturation stockée sur le serveur de session ; le procédé comprenant en outre :
la détermination d'une redevance ou d'un volume de la session après l'établissement de la session, et la terminaison de la session ou le fait d'inviter l'utilisateur appelant à renvoyer des deuxièmes informations de facturation comprenant une nouvelle redevance ou un nouveau volume si la redevance ou le volume de la session dépasse la redevance ou le volume souhaité par l'utilisateur appelant ;
le transfert d'informations de facturation entre un premier opérateur et d'autres opérateurs et la fourniture, par le premier opérateur, à l'utilisateur appelant d'informations de facturation conformes à des informations de facturation fournies par d'autres opérateurs ; et
la réception, par des serveurs d'autres opérateurs, des informations de facturation, la détermination du fait de savoir si les informations de facturation sont raisonnables et,
lorsque tous les serveurs considèrent que la redevance est raisonnable, l'établissement d'une session entre l'équipement utilisateur appelant et un équipement utilisateur appelé ; dans lequel
l'étape de transfert d'informations de facturation entre un premier opérateur et d'autres opérateurs et la fourniture, par le premier opérateur, à un utilisateur, d'informations de facturation conformes à des informations de facturation fournies par d'autres opérateurs comprend :
après réception des informations de facturation de l'utilisateur appelant, la détermination, par un serveur A du premier opérateur, d'une redevance maximale facturée par un deuxième opérateur, la modification du contenu des informations de facturation et l'envoi du contenu des informations de facturation en tant que partie de la demande de session à un serveur B du deuxième opérateur ; dans lequel l'étape de détermination, par un serveur A du premier opérateur, d'une redevance maximale facturée par un deuxième opérateur comprend :
la soustraction, par le serveur A du premier opérateur, de son propre tarif et
l'application d'une déduction au revenu du deuxième opérateur.

2. Procédé selon la revendication 1, dans lequel les premières informations de facturation comprennent en outre un tarif souhaité par l'utilisateur appelant ; le procédé comprenant en outre :
la terminaison de la session ou le fait d'inviter l'utilisateur appelant à renvoyer des deuxièmes informations de facturation comprenant un nouveau tarif si les autres informations de la session changent pendant la session.

3. Procédé selon la revendication 2, dans lequel le fait que les premières informations de facturation sont raisonnables comprend en outre :
si la première unité de communication est un utilisateur à prépaiement, le fait qu'un solde d'un compte de prépaiement de l'appelant ne dépasse pas une ligne de crédit.

4. Procédé selon la revendication 1, dans lequel l'initiateur de session stocke des règles de facturation correspondant à différentes sessions ; et
la réception de la demande de session comprend :
la lecture, par l'initiateur de session, d'une règle de facturation correspondant à la session et le fait qu'il génère les premières informations de facturation conformément à la règle de facturation correspondant à la session ; et
la réception, par le serveur de session, de la demande de session comprenant les premières informations de facturation en provenance de l'initiateur de session.

5. Procédé selon la revendication 4, dans lequel les règles de facturation correspondant à différentes sessions comprennent des règles de facturation correspondant à différents utilisateurs appelés.

6. Procédé selon la revendication 1, dans lequel les premières informations de facturation comprennent des informations d'indicateur pour demander au serveur de session d'envoyer la règle de facturation à l'initiateur de session ; le procédé comprenant en outre :
la réception (203), par l'initiateur de session, de la règle de facturation en provenance du serveur de session, le fait de considérer la règle de facturation en tant que premières informations de facturation, et l'envoi d'une nouvelle demande de session au serveur de session, les premières informations de facturation contenues dans la nouvelle demande de session comprenant des informations d'indicateur pour indiquer un accord portant sur la règle de facturation.

7. Procédé selon la revendication 1, comprenant en outre :
l'invitation, par l'initiateur de session, de l'utilisateur appelant à renvoyer les deuxièmes informations de facturation et l'envoi des deuxièmes informations de facturation au serveur de session après obtention d'une confirmation en provenance de l'utilisateur appelant.

8. Procédé selon la revendication 1, comprenant en outre :
la fourniture (205) d'informations de facturation à l'initiateur de session afin de les présenter à l'utilisateur appelant pendant la session ou après la session.

9. Système de traitement d'une session, comprenant :
une première unité, configurée pour recevoir une demande de session comprenant des premières informations de facturation en provenance d'un initiateur de session, les premières informations de facturation comprenant une redevance ou un volume souhaité par un utilisateur appelant ;
une deuxième unité, configurée pour poursuivre le traitement de la demande d'appel si la deuxième unité détermine que les premières informations de facturation sont raisonnables conformément à une règle de facturation, **caractérisé en ce que** le fait que les premières informations de facturation sont raisonnables comprend au moins l'un : du fait que la redevance ou le volume souhaité par l'utilisateur appelant dans les premières informations de facturation n'est pas inférieur à une redevance ou à un volume minimum dans la règle de facturation stockée sur le serveur de session, et le fait que le tarif souhaité par l'utilisateur appelant n'est pas inférieur à un tarif minimum dans la règle de facturation stockée sur le serveur de session ; le système comprenant en outre :
une troisième unité, configurée pour déterminer une redevance ou un volume de la session après que la deuxième unité a établi la session, et pour terminer la session ou
inviter l'utilisateur appelant à renvoyer des deuxièmes informations de facturation comprenant une nouvelle redevance ou un nouveau volume si la redevance ou le volume de la session dépasse ou va dépasser la redevance ou le volume souhaité par l'utilisateur appelant ; dans lequel
les informations de facturation sont transférées entre un premier opérateur et d'autres opérateurs, et le premier opérateur fournit à l'utilisateur appelant des informations de facturation conformes à des informations de facturation fournies par d'autres opérateurs ;
des serveurs d'autres opérateurs sont configurés pour recevoir les informations de facturation et pour déterminer si les informations de facturation sont raisonnables et,
lorsque tous les serveurs considèrent que la redevance est raisonnable, une session est établie entre l'équipement utilisateur appelant et un équipement utilisateur appelé ;
un serveur A du premier opérateur est configuré pour déterminer une redevance maximale facturée par un deuxième opérateur après réception des informations de facturation de l'utilisateur appelant, pour modifier le contenu des informations de facturation et pour envoyer le contenu des informations de facturation en tant que partie de la demande de session à un serveur B du deuxième opérateur ; dans lequel le serveur A du premier opérateur est configuré pour soustraire son propre tarif et
appliquer une déduction au revenu du deuxième opérateur.

10. Système selon la revendication 9, comprenant en outre :
une quatrième unité, configurée pour stocker la règle de facturation.
